# EUROPÄISCHE PATENTSCHRIFT

(11) **EP 1 441 920 B1**
(45) Veröffentlichungstag und Bekanntmachung des Hinweises auf die Patenterteilung: **03.01.2007**
(21) Anmeldenummer: 02779494.0
(22) Anmeldetag: 17.10.2002
(51) Int. Cl.: B60H 1/00

(54) **VERFAHREN ZUR STEUERUNG EINER KLIMAANLAGE FÜR EIN FAHRZEUG**
METHOD FOR CONTROLLING AN AIR CONDITIONING UNIT FOR AN AUTOMOBILE
PROCEDE DE COMMANDE D'UNE CLIMATISATION AUTOMOBILE

(30) Priorität: 10.11.2001 DE 10155410
(43) Veröffentlichungstag der Anmeldung: 04.08.2004
(73) Patentinhaber: Preh GmbH, 97616 Bad Neustadt a.d. Saale (DE)
(72) Erfinder: GUTBROD, Thomas, 97616 Bad Neustadt (DE); NÖTH, Thomas, 97616 Bad Neustadt (DE)
(74) Vertreter: Thul, Hermann
(86) Internationale Anmeldenummer: PCT/EP2002/011598
(87) Internationale Veröffentlichungsnummer: WO 2003/041976

(56) Entgegenhaltungen:
- DE-C- 19 829 143
- US-A- 5 553 661
- PATENT ABSTRACTS OF JAPAN vol. 008, no. 216 (M-329), 3. Oktober 1984 (1984-10-03) & JP 59 100010 A (MATSUSHITA DENKI SANGYO KK), 9. Juni 1984 (1984-06-09)

## Beschreibung

### Technisches Gebiet

Zur Regelung und/oder Steuerung einer Klimaanlage wird bekanntlich die Sonneneinstrahlung sowie die sonnenintensität im Fahrzeug bestimmt. Ein derartiges Verfahren liegt der US 5553661 zugrunde.

### Stand der Technik

Die DE 197 44 414 A1 beschreibt eine Kraftfahrzeugklimaanlage, die mehrere Betriebszustände aufweist, die in Abhängigkeit von einem vorgebbaren Sollbetriebsgebiet, d.h. des Gebietes, in dem sich das Fahrzeug befindet, selbsttätig eingestellt werden. Derartige Sollgebiete sind unter anderem Deutschland, die USA usw., wobei auch dem unterschiedlichen Klimakomfortempfinden der jeweiligen Bevölkerung Rechnung getragen wird. Zur automatischen Betriebszustandseinstellung ist eine Steuereinheit mit einem Navigationssystem verbunden, welches einen Sensor zum Empfang von GPS-Daten aufweist.

Auch die DE 198 02 594 A1 beschreibt ein Verfahren zum Steuern von Einrichtungen für automatische Fahrfunktionen, wie die Einstellung eines Klimaprofiles für eine Klimaanlage. Unter zur Hilfenahme von Daten, die über den momentanen Aufenthaltsort Auskunft geben, werden länderspezifische Programme einstellt. Dabei werden neben GPS-Daten auch Daten eines RDS (Radio-Daten-System) herangezogen, die länderspezifische Informationen beinhalten.

Ein Verfahren zur Steuerung/Regelung von Wärmeströmen im Kraftfahrzeug wird in der DE 199 53 511 A1 offenbart. Hieraus ist bekannt, die momentane Umgebung mittels GPS-Daten zu ermitteln oder aus Signalen zu erfassen, die von einem gespeicherten kartographischen Umgebungsmodell erfaßt werden. Die Steuerung/Regelung selbst erfolgt jedoch anhand vom momentanen Lastzustand des Kraftfahrzeugmotors und den momentanen Fahrzeugbetriebs- und Umgebungsbedingungen.

Des Weiteren werden in der DE 199 02 201 A1 ein Verfahren zur Regelung eines Innenraumklimas eines Fahrzeuges und eine entsprechende Vorrichtung aufgezeigt. Hierbei wird in Abhängigkeit eines individuell gewünschten Innenraumklimas und einem erfaßten Außenraumklimas an einem Zielort das lnnenraumklima an das am Zielort vorherrschende Klima langsam angepaßt, um einem als unangenehm empfundenen Klimaschock vorzubeugen.

Aus der DE 40 24 431 C2 ist ein gattungsgemäßes Verfahren zur Steuerung einer Klimaanlage für ein Kraftfahrzeug bekannt, bei dem eine gleichmäßige Klimatisierung entsprechend der Größe der Sonneneinstrahlung durch die Steuerung von Luftmengen aus einem rechten und einem linken Luftauslaß erreicht wird. Diese Steuerung erfolgt auch unter Berücksichtigung der Wünsche eines Fahrgastes. Mit Hilfe eines Sonnenrichtungsanalysators, der die Richtung der Sonneneinstrahlung mittels zweier Sonneneinstrahlungssensoren ermittelt, und einem Sonnenintensitätsanalysators zur Berechnung der Intensität der Sonneneinstrahlung wird die Innenraumtemperatur automatisch ausgeregelt. Die Sonneneinstrahlungssensoren messen die Sonneneinstrahlung rechts und links auf das Fahrzeug.

Eine optimale Komfortregelung im Fahrzeug kann jedoch nur dann umgesetzt werden, wenn nicht nur die tatsächliche Sonnenintensität, sondern auch die Sonnenposition relativ zum Fahrzeug bekannt ist.

Einen Sonnenstandsdetektor zur Bestimmung des Einfallswinkels sowie der Einfallsrichtung der Sonnenstrahlen beschreibt die DE 197 48 826 C1. Dieser Sensor umfaßt eine Schattenmaske, in die eine Durchlaßöffnung zum Durchlassen von Sonnenlicht eingebracht ist. In Abhängigkeit von dem Einfallswinkel des durch die Durchlaßöffnung durchtretenden Sonnenlichts sind unterschiedliche Bildpunkte eines darunter befindlichen Sensorarrays bestrahlt, so daß eine eindeutige Aussage in bezug auf den Einfallswinkel und die Einfallsrichtung des Sonnenlichtes möglich ist. Vorgesehen ist hierbei, mit diesen Signalen eine Kraftfahrzeugbeleuchtung zu schalten. Nicht bestimmt wird die Intensität der Sonneneinstrahlung.

Aus der DE 40 41 770 C1 ist der Aufbau eines Sonnensensors bekannt.

### Darstellung der Erfindung

Die Aufgabe der Erfindung besteht darin, ein Verfahren anzugeben, mit dem eine individuelle Regelung des Innenraumklimas unter Berücksichtigung der Intensität und der Sonneneinstrahlungrichtung erfolgen kann.

Gelöst wird die Aufgabe durch die Merkmale des Patentanspruchs 1.

Der Erfindung liegt die Idee zugrunde, die Intensität und Richtung einer Sonneneinstrahlung in ein Fahrzeug aus einer absoluten Sonnenposition und einer räumlichen Ausrichtung des Fahrzeuges vor Ort sowie einer gemessenen Sonnenintensität zu ermitteln.
Die absolute Sonnenposition wird dabei in Abhängigkeit von der Position auf dem Globus sowie der Tages- und Jahreszeit bestimmt. Die relative Sonnenposition zum Fahrzeug bestimmt sich aus der Fahrzeugausrichtung des Fahrzeuges auf dem Globus, welche mittels GPS-Daten, Beschleunigungssensoren und/oder einem zusätzlichen Fahrzeugkompaß bestimmt werden kann. Anhand dieser Daten, einzeln oder auch in Zusammenschau, und dem tatsächlichen, absoluten Sonnenstand, d.h. der aktuellen Sonnenposition am Himmel, kann die Position der Sonnen relativ zum Fahrzeug bestimmt werden. Unter Berücksichtigung der Sonnenintensität wird daraus die Intensität der Sonneneinstrahlung direkt in den Innenraum des Fahrzeuges bestimmbar.

Die Kenntnis der exakten Sonnenposition erlaubt eine genaue Messung der Sonnenintensität, die auf die Personen im Innenraum einwirkt. Durch das Wissen um die Tages- und Jahreszeit sowie der Klimazone, in welcher sich das Fahrzeug befindet, ist zusätzlich eine Plausibilitätsprüfung der Intensitätsmessung möglich, um Fehlregelungen, z.B. bei einer starken Rotverschiebung des Sonnenspektrums, zu unterbinden. Dies ermöglicht den Einsatz von einfachen Sensoren, wie beispielsweise Silicium-Photodioden oder -Phototransistoren.

In Weiterführung der Erfindung kann mit Hilfe von Neigungssensoren zudem die Neigung des Fahrzeuges bezüglich der Längs- und der Querachse der Fahrzeuges mit hoher Genauigkeit ermittelt und bei der Bestimmung der Intensität der in den Fahrzeuginnenraum einwirkenden Sonnenstrahlung berücksichtigt werden.

Das Verfahren ermöglicht eine individuelle Klimakomfortregelung für die Person, die der direkten Sonneneinstrahlung ausgesetzt ist, ohne eine Komfortverschlechterung für andere Personen, welche sich beispielsweise im Schatten des Fahrzeugdaches befinden, zu erhalten.

### Kurze Beschreibung der Zeichnung

Anhand eines Ausführungsbeispieles mit Zeichnung soll die Erfindung näher erläutert werden.
Es zeigt
- Fig. 1: ein Fahrzeug mit einem Sonnensensor,
- Fig. 2: in einer Blockbilddarstellung den Aufbau der
- Fig. 3: in einer Blockbilddarstellung den Verfahrensablauf.

### Wege zur Ausführung der Erfindung

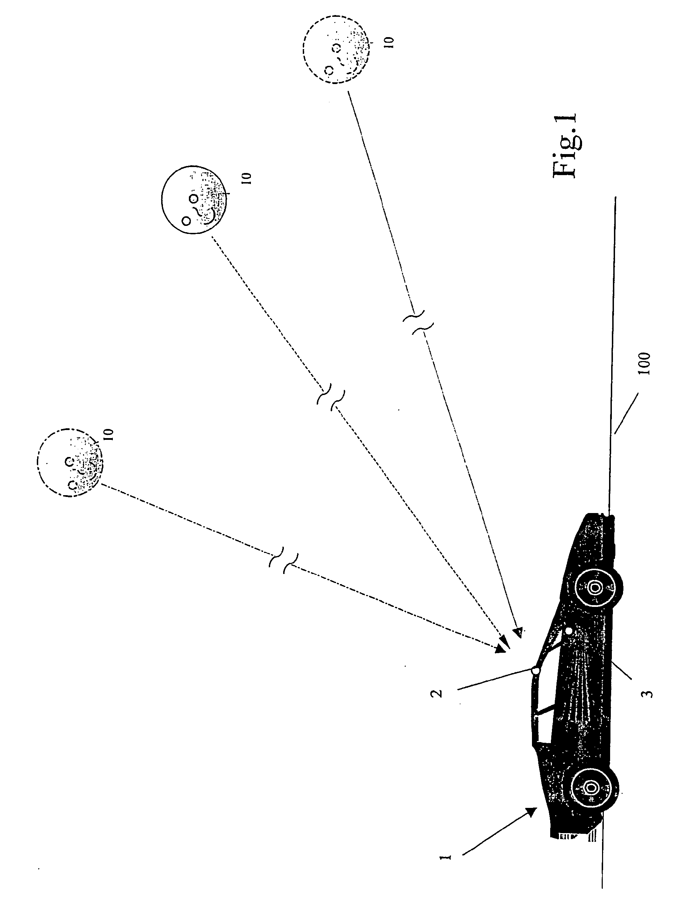

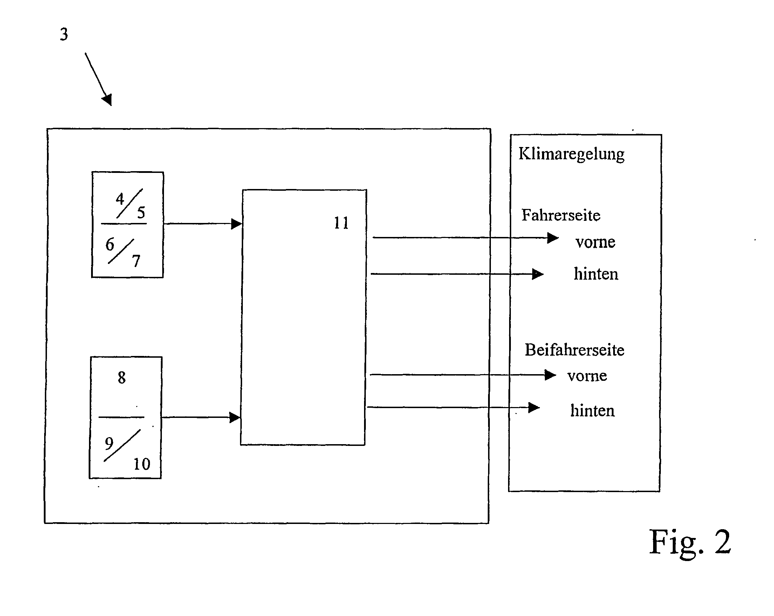

In Fig. 1 ist ein Fahrzeug 1 dargestellt, welches mit einem Sonnensensor 2 sowie weiteren, für das Verfahren notwendige elektronischen Baugruppen 3 ausgestattet ist. Mit 10 ist eine Sonne in unterschiedlichen Positionen zum Fahrzeug 1 dargestellt. Dabei wird davon ausgegangen, daß das Fahrzeug 1 über eine Navigationsanlage 4 und/oder einen GPS-Empfänger 5, ein RDS-Radio 6 mit einem angeschlossenen CAN-Bus oder eine Datumsangabe 7 mit Uhrzeit, und/oder einen Kompaß 8 oder wenigstens einen Beschleunigungssensor 9 und wenigstens einen Neigungssensor 10 verfügt, die mit einem Mikroprozessor 11 verschaltet sind (Fig.2). Die vorgenannten Baugruppen 3 sind dabei in bekannter Art und Weise am Fahrzeug 1 bzw. in diesem integriert.

Ein erster Beschleunigungssensor 9 hat die Aufgabe, die Fahrzeugquerbeschleunigung zu ermitteln, ein zweiter (nicht näher dargestellt), ein Signal für die Fahrzeuglängsbeschleunigung zu liefern, welches auch anhand der Änderung der Fahrgeschwindigkeit ermittelt werden kann. Die Aufgabe des ersten Neigungssensors 10 besteht hingegen darin, die Fahrzeuglängsneigung zu bestimmen, bei einem zweiten, nicht dargestellten Neigungssensor, vorzugsweise die Querneigung des Fahrzeuges zu messen.
Es besteht aber auch die Möglichkeit, die notwendigen Meßdaten durch Kombination von nur einem Beschleunigungssensor 9 und einem Neigungssensor 10 zu erhalten. Die Beschleunigungswerte geben zwar eine Information über die Richtungsänderung, jedoch nicht über die Fahrzeugrichtung an, so daß die exakten Informationen vorzugsweise durch einen Abgleich mit Hilfe der GPS-Daten der GPS-Empfängers 5 geliefert werden.

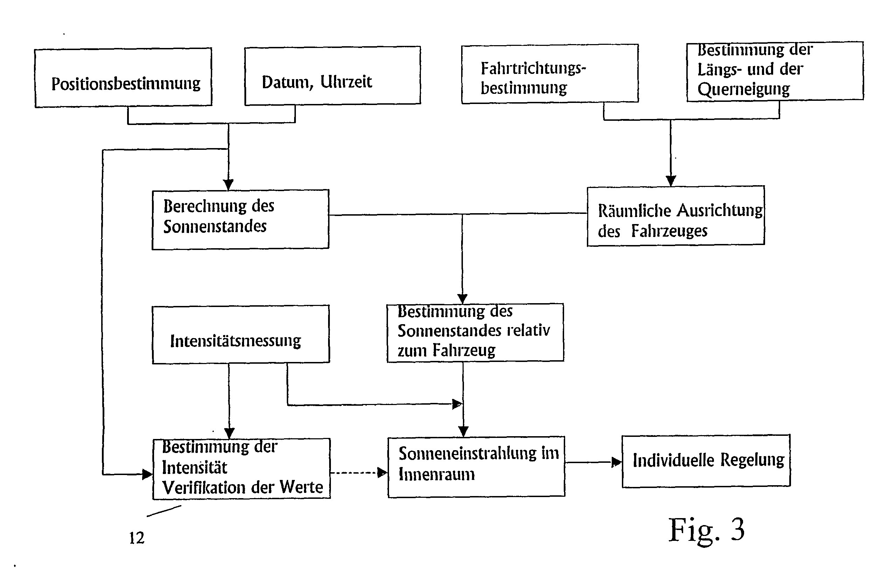

Das Verfahren ist der Fig. 3 blockbildartig beschrieben.
Anhand der GPS-Daten, bzw. anderer, ein Sollgebiet definierenden Daten, wird nun in einem ersten Schritt eine aktuelle Positionsbestimmung des Fahrzeuges vorgenommen. Die Daten kann die Navigationsanlage 4 oder der GPS-Empfänger 5 liefern.
Parallel dazu werden die weiteren Daten, wie Datum und Uhrzeit, beispielsweise dem RDS 6 entnommen. Aus beiden Informationen wird ein erster Wert über den absolute Sonnenstand vor Ort ermittelt.

Neben dieser Bestimmung des absoluten Sonnenstandes erfolgt die Bestimmung der Fahrtrichtung sowie der Längs- und der Querneigung des Fahrzeuges 1 zur Ermittlung der räumlichen Ausrichtung des Fahrzeuges 1 bezogen auf die Erdoberfläche 100.

Die Information über die Fahrtrichtung bzw. die Veränderung der Fahrzeugposition im Laufe der Fahrt und eventuell die Steigung der Strecke können über die bereits erwähnten GPS-Daten bestimmt werden. Informationen über kleinräumige Bewegungen, wie z.B. die Ausrichtung des Fahrzeuges beim Einparken, können über einen Lenkwinkelsensor (nicht dargestellt) des Fahrzeuges 1 geliefert werden.

Die Ausrichtung des Fahrzeuges 1 ist zudem über Daten des Fahrzeugkompasses 8 ermittelbar.

Zusätzlich kann die Längsneigung beispielsweise bei Steigung der Strecke aus den GPS-Daten bestimmt werden, wozu entsprechende Informationen im Mikroprozessor 11 hinterlegt sind oder aber direkt aus der Änderung der vertikalen Position.

Aus den beiden Informationen, der aktuellen Fahrtrichtung und der aktuellen Neigung ist die räumliche Ausrichtung des Fahrzeuges 1 feststellbar.

Mit dem absoluten Sonnenstand und der räumlichen Ausrichtung wird in einem Zwischenschritt nunmehr der relative Sonnenstand zum Fahrzeug 1 ermittelt.

Weiterhin wird über einen vorzugsweisen einfachen Sonnensensor 2 die Intensität der Sonneneinstrahlung auf das Fahrzeug 1 gemessen und zusammen mit dem ermittelten relativen Sonnenstand wird danach die Sonneneinstrahlung in den Innenraum des Fahrzeuges 1 ermittelt. Aus diesem Wert heraus wird eine individuelle Regelung der Innenraumtemperatur vorgenommen, wobei der Person bzw. den Personen, die der direkten Sonneneinstrahlung ausgesetzt ist, beispielsweise mehr Kaltluft zugeführt wird, als den anderen.

Bei Verwendung eines einfachen Sonnensensors 8 bietet sich die Zwischenschaltung einer Stufe 12 an, in der die gemessene Strahlenintensität mit den bekannten Daten des GPS 5 und des RDS 6 zwecks Verifikation miteinander verglichen werden. Siliciumsensoren sind typischer Weise im Bereich von 380 nm bis ca. 1150 nm empfindlich, bei Verwendung eines Tageslichtfilters im Bereich von 730 nm bis ca. 1120 nm. Daher wird mit diesen Sensoren 2 nur ein Teil der eingestrahlten Sonnenleistung gemessen. Die gesamte Sonnenleistung (Intensität) wird mit Hilfe der spektralen Verteilung des Sonnenlichtes ermittelt. Insbesondere bei auf- oder untergehender Sonne 10 kommt es zu einer erheblichen Veränderung des Sonnenspektrums, die eine hohe Gesamtintensität suggeriert. Die tatsächliche Sonnenintensität ist aber aufgrund der fehlenden ultravioletten und sichtbaren Anteile weit geringer. Mit Hilfe der Sonnenposition und der tageszeitabhängigen für den gegebenen Ort maximal zu erwartenden Sonnenintensitäten können Meßfehler des Sensors 2 erkannt und kompensiert werden.

Weiterhin ist mit dieser Stufe 12 eine Funktionsprüfung des Sensors 2 möglich. Das Ergebnis dieses Vergleiches kann dann in den Verfahrensablauf eingreifen. Ist das Ergebnis des Vergleiches beispielsweise positiv, d.h. liegt die gemessene Intensität im Bereich der möglichen Intensität, wird die individuelle Regelung aktiviert. Ist das Ergebnis hingegen negativ, erfolgt eine erneute Berechnung, insbesondere eine erneute Intensitätsmessung. Ergibt sich erneut ein negatives Ergebnis, kann beispielsweise auf einen Defekt des Sonnensensors 2 geschlußfolgert werden. Dieser sollte dann ausgewechselt werden. Für eine weitere Funktionstüchtigkeit der Klimaregelung können dann beispielsweise die für die Kompensation abgelegten Daten verwendet werden. Unter Fahrzeug werden neben dem Kraft- und Nutzfahrzeugen auch Schienen- und Wasserfahrzeuge definiert.

## Patentansprüche

1. Verfahren zur Steuerung einer Klimaanlage für ein Fahrzeug (1), wobei die Sonneneinstrahlung sowie die Sonnenintensität berücksichtigt werden, wobei
- in einem ersten Schritt eine Positionsbestimmung des Fahrzeuges (1) erfolgt, aus der
- ein absoluter Sonnenstand ermittelt wird,
- in einem weiteren Schritt eine räumliche Ausrichtung des Fahrzeuges (1) bestimmt wird, wobei
- aus den beiden Werten ein Sonnenstand relativ zum Fahrzeug (1) ermittelt wird, mit dem
- unter Nutzung der gemessenen Sonnenintensität eine direkte Sonneneinstrahlung in den Innenraum des Fahrzeuges (1) bestimmt wird, **dadurch gekennzeichnet, dass** die räumliche Ausrichtung durch eine zusätzliche Ermittlung einer Längs- und einer Querneigung des Fahrzeugs ermittelt wird.

2. Verfahren nach Anspruch 1, **dadurch gekennzeichnet, dass** die Richtung der Sonneneinstrahlung in den Innenraum des Fahrzeuges (1) ermittelt wird.

3. Verfahren nach Anspruch 1 oder 2, **dadurch gekennzeichnet, dass** die Bestimmung der Position aus GPS-Daten und/oder RDS-Daten erfolgt.

4. Verfahren nach einem der Ansprüche 1 bis 3, **dadurch gekennzeichnet, dass** die absolute Sonnenposition unter zur Hilfenahme des Datums und der Uhrzeit bestimmt wird.

5. Verfahren nach einem der Ansprüche 1 bis 4, **dadurch gekennzeichnet, dass** die räumliche Ausrichtung des Fahrzeuges aus den GPS-Daten eines GPS-Empfängers (5), Daten wenigstens eines Beschleunigungssensors (9) und/oder einem Fahrzeugkompaß (8) bestimmt wird.

6. Verfahren nach Anspruch 1, **dadurch gekennzeichnet, dass** die Längs- bzw. Querneigung des Fahrzeuges über wenigstens einen Neigungssensor (10) gemessen werden.

7. Verfahren nach einem der Ansprüche 1 bis 6, **dadurch gekennzeichnet, dass** kleinere Bewegungsänderungen durch Signale eines Lenkwinkelsensors geliefert werden.

8. Verfahren nach einem der Ansprüche 1 bis 7, **dadurch gekennzeichnet, dass** die Intensität der Sonneneinstrahlung von einem Sonnensensor (2) gemessen wird.

9. Verfahren nach einem der Ansprüche 1 bis 8, **dadurch gekennzeichnet, dass** die gemessene Strahlenintensität mit den GPS-Daten und/oder RDS-Daten miteinander verglichen werden.

10. Verfahren nach Anspruch 9, **dadurch gekennzeichnet, dass** im Ergebnis des Vergleiches Meßfehler des Sonnensensors (2) kompensiert werden.

11. Verfahren nach Anspruch 10, **dadurch gekennzeichnet, dass** in die Steuerung der Klimaanlage derart eingegriffen wird, dass bei einem negativen Ergebnis die einzelnen Schritte erneut abgearbeitet werden.

## Claims

1. Method for controlling an air-conditioning installation for a vehicle (1), with the exposure to the sun's rays and also the intensity of the sun being taken into account, where
- in a first step a position is found for the vehicle (1), from which
- an absolute position of the sun is ascertained,
- in a further step a physical orientation of the vehicle (1) is determined, where
- the two values are used to ascertain a position of the sun relative to the vehicle (1), with which
- the measured intensity of the sun is used to determine a direct exposure to the sun's rays in the interior of the vehicle (1), **characterized in that** the physical orientation is ascertained by additionally ascertaining a longitudinal and a transverse inclination of the vehicle.

2. Method according to Claim 1, **characterized in that** the direction of the exposure to the sun's rays in the interior of the vehicle (1) is ascertained.

3. Method according to Claim 1 or 2, **characterized in that** the position is found from GPS data and/or RDS data.

4. Method according to one of Claims 1 to 3,
**characterized in that** the absolute position of the sun is determined using the date and the time.

5. Method according to one of Claims 1 to 4,
**characterized in that** the physical orientation of the vehicle is determined from the GPS data from a GPS receiver (5), data from at least one acceleration sensor (9) and/or from a vehicle compass (8).

6. Method according to Claim 1, **characterized in that** the longitudinal and transverse inclinations of the vehicle are measured using at least one inclination sensor (10).

7. Method according to one of Claims 1 to 6,
**characterized in that** relatively small changes in movement are supplied by signals from a steer angle sensor.

8. Method according to one of Claims 1 to 7,
**characterized in that** the intensity of the exposure to the sun's rays is measured by a solar sensor (2).

9. Method according to one of Claims 1 to 8,
**characterized in that** the measured intensity of the rays is compared with the GPS data and/or RDS data.

10. Method according to Claim 9, **characterized in that** the result of the comparison is used to compensate for measurement errors in the solar sensor (2).

11. Method according to Claim 10, **characterized in that** action is taken in the control of the air-conditioning installation such that if the result is negative then the individual steps are executed again.

## Revendications

1. Procédé de commande d'un système de climatisation pour un véhicule (1), le rayonnement solaire ainsi que l'intensité solaire étant pris en considération, dans lequel
- dans une première étape, on assiste à une détermination de la position du véhicule (1) à partir de laquelle
- est déterminée une position absolue du soleil,
- dans une étape supplémentaire, est déterminée une orientation du véhicule (1) dans l'espace,
- à partir des deux valeurs une position du soleil étant déterminée par rapport au véhicule (1), avec laquelle
- sous exploitation de l'intensité solaire mesurée, un rayonnement solaire direct dans l'habitacle du véhicule (1) est déterminé, **caractérisé en ce que** l'orientation dans l'espace est déterminée par une détermination supplémentaire d'une inclinaison longitudinale et transversale du véhicule.

2. Procédé selon la revendication 1, **caractérisé en ce que** la direction du rayonnement solaire dans l'habitacle du véhicule (1) est déterminée.

3. Procédé selon la revendication 1 ou 2, **caractérisé en ce que** la détermination de la position est effectuée à partir de données GPS et/ou de données RDS.

4. Procédé selon l'une quelconque des revendications 1 à 3, **caractérisé en ce que** la position absolue du soleil est déterminée à l'aide de la date et de l'heure.

5. Procédé selon l'une quelconque des revendications 1 à 4, **caractérisé en ce que** l'orientation du véhicule dans l'espace est déterminée à partir des données GPS d'un récepteur GPS (5), de données d'au moins un capteur d'accélération (9) et/ou d'un compas de véhicule (8).

6. Procédé selon la revendication 1, **caractérisé en ce que** l'inclinaison longitudinale ou transversale du véhicule est mesurée par l'intermédiaire d'au moins un capteur d'inclinaison (10).

7. Procédé selon l'une quelconque des revendications 1 à 6, **caractérisé en ce que** de plus petites variations de déplacement sont fournies par des signaux d'un capteur de l'angle de direction.

8. Procédé selon l'une quelconque des revendications 1 à 7, **caractérisé en ce que** l'intensité du rayonnement solaire est mesurée par un capteur solaire (2).

9. Procédé selon l'une quelconque des revendications 1 à 8, **caractérisé en ce que** l'intensité de rayonnement mesurée est comparée avec les données GPS et/ou les données RDS.

10. Procédé selon la revendication 9, **caractérisé en ce qu'**au résultat de la comparaison, des erreurs de mesure du capteur solaire (2) sont compensées.

11. Procédé selon la revendication 10, **caractérisé en ce qu'**on intervient dans la commande du système de climatisation de sorte que dans le cas d'un résultat négatif, les étapes individuelles soient de nouveau effectuées.
